# EUROPÄISCHE PATENTANMELDUNG

(11) **EP 1 234 740 A2**
(43) Veröffentlichungstag der Anmeldung: **28.08.2002**
(21) Anmeldenummer: 02000915.5
(22) Anmeldetag: 16.01.2002
(51) Int. Cl.: B60T 8/00

(54) **Verfahren und Vorrichtung zur Stabilisierung eines Fahrzeuggespanns**

(30) Priorität: 21.02.2001 DE 10108382
(71) Anmelder: DaimlerChrysler AG, 70567 Stuttgart (DE)
(72) Erfinder: Simeth, Martin, 61462 Königstein (DE); Haug, Jürgen, 60528 Frankfurt (DE); Seufert, Ralf, 61389 Schmitten (DE)

(57) **Zusammenfassung**

Die Erfindung betrifft ein Verfahren und eine Vorrichtung zur Stabilisierung eines Fahrzeuggespanns mit einer beweglichen Anhängerkupplung, die mittels einer Führung am Zugfahrzeug befestigt ist und mittels Stellgliedern in der Führung mit einer horizontalen Komponente quer zur Längsächse des Zugfahrzeugs verfahrbar ist. Die Bewegung der Anhängerkupplung wird hierbei von einem Steuergerät entsprechend einer in dem Steuergerät implementierten Fahrdynamikregelung, geregelt. Die Bewegung der Anhängerkupplung erfolgt hierbei in der Richtung der Pendelbewegung der Anhängerdeichsel, so daß der Winkel zwischen Zugfahrzeug und Anhängerdeichsel bei Auftreten einer Pendelbewegung durch die Bewegung der Anhängerkupplung verkleinert wird. Auf diese Weise wird der Pendelbewegung des Anhängers entgegengewirkt und ein Aufschaukeln der Pendelbewegung innerhalb der physikalischen Grenzen des Systems verhindert.

## Beschreibung

Die Erfindung betrifft ein Erzeugnis mit den Merkmalen des unabhängigen Anspruchs.

Von Kraftfahrzeugen oder Lastkraftwagen gezogene Anhänger können in Abhängigkeit von Beladung und Geschwindigkeit sehr leicht in starke Pendelbewegungen versetzt werden. Diese Pendelbewegungen beinträchtigen die Fahrstabilität der Fahrzeugkombination und führen zu einem kritischen für den Fahrer schwer beherrschbaren Zustand, nicht selten mit Unfallfolge.

Fahrdynamikregelungen für einzelne Fahrzeuge sind bekannt und werden unter der Abkürzung ESP (ESP=Electronic Stability Programm) von der Firmen BOSCH GmbH und DAIMLERCHRYSLER AG in Kraftfahrzeugen eingesetzt. Eine prinzipielle Beschreibung einer Fahrdynamikregelung findet sich in "Fahrsicherheitssysteme/Bosch", Hrsg.: Robert Bosch GmbH, 2., aktualisierte und erw. Auflage, Vieweg, 1998. Demnach enthält eine Fahrdynamikregelung ein Regelprogramm, das aus einer Regelabweichung zwischen Sollverhalten des Fahrzeug (=Fahrerwunsch) und Istverhalten des Fahrzeugs (=Fahrzeugverhalten) entsprechend einem abgespeicherten, das Fahrzeug charakterisierenden Spurmodells die Steuerbefehle für Stellglieder der zugehörigen Regelstrecke berechnet. Das Spurmodell für das Fahrzeug wird experimentell in Fahrversuchen mit dem Fahrzeug ermittelt. Die Regelstrategie des Regelprogramms sorgt dann dafür, daß innerhalb der physikalischen Grenzen des Gesamtsystems Fahrzeug das Fahrzeug der durch den Lenkradwinkel vorgegebenen Fahrspur (=Fahrerwunsch) folgt. Droht Gefahr, daß die physikalischen Grenzen des Fahrzeugs überschritten werden, greift die Fahrdynamikregelung prohibitiv ein.

Aufbauend auf bekannten Fahrdynamikregelungen hat man in der DE 197 08 144 Al ein Verfahren zur Vermeidung von Pendelbewegungen eines von einem Kraftfahrzeug gezogenen Anhängers vorgeschlagen, bei dem die Deichselräder des Anhängers gezielt abgebremst werden, um ein Zusatzdrehmoment zu erzeugen, das der Pendelbewegung des Anhängers entgegenwirkt. Hierzu verfügt der Anhänger über eine eigenständige Fahrdynamikregelung.

Der Nachteil eines solchen Systems ist, dass in einem Fuhrpark alle Anhänger mit einer eigenständigen Fahrdynamikregelung ausgerüstet sein müssen. Dies führt insbesondere bei kleineren Anhängern zu unverhältnismäßig hohen Investitionen, die im Freizeitbereich bei Sporttraillern, Wohnwagen, Kleinstanhängern, die von Pkw gezogen werden, in keinem akzeptablen Verhältnis zum Anhängerwert stehen.

Ausgehend von dem vorbeschriebenen Stand der Technik stellt sich die Aufgabe, eine Anhängerstabilisierung durch alleinige Maßnahmen am Zugfahrzeug zu erreichen.

Erfindungsgemäß wird diese Aufgabe gelöst durch die Merkmale der unabhängigen Ansprüche. Weitere vorteilhafte Ausführungsformen sind in den Unteransprüchen und in der Beschreibung enthalten.

Die Lösung gelingt mit einer beweglichen Anhängerkupplung, die mittels einer Führung am Zugfahrzeug befestigt ist und mittels Stellgliedern in der Führung mit einer horizontalen Komponente quer zur Längsächse des Zugfahrzeugs verfahrbar ist. Die Bewegung der Anhängerkupplung wird hierbei von einem Steuergerät entsprechend eines in dem Steuergerät implementierten Regelprogramms geregelt. Die Bewegung der Anhängerkupplung erfolgt hierbei in der Richtung der Pendelbewegung der Anhängerdeichsel, so daß die Auslenkung der Anhängerdeichsel bei Auftreten einer Pendelbewegung durch die Bewegung der Anhängerkupplung verkleinert wird. Auf diese Weise wird der Pendelbewegung des Anhängers entgegengewirkt und ein Aufschaukeln der Pendelbewegung innerhalb der physikalischen Grenzen des Systems verhindert.

Hinsichtlich der Meßsensorik bestehen mehrere Möglichkeiten. So kann beispielsweise eine Winkelmessung an der Deichsel des Anhängers durchgeführt werden, mit der die Auslenkung des Anhängers gegenüber der gedachten Verlängerung der Längsachse des Zugfahrzeuges festgestellt wird. Dieser gemessene Winkel kann dann in Abhängigkeit möglicher weiterer Bewegungsgrößen des Zugfahrzeuges als Regelgröße in die Regelstrategie des Steuergerätes eingehen. Die Winkelmessung kann hierbei aus einem Drehwinkelsensor bestehen, der direkt in der Kupplungsfaust integriert ist oder aus einem fest am Zugfahrzeug angebrachten, berührungslos mittels Radar, Ultraschall oder optisch arbeitenden Entfernungsensor bestehen. Die Regelungsstrategie zur Unterdrückung der Pendelbewegungen folgt dabei dem Prinzip den Pendelausschlag der Anhängerdeichsel zu verkleinern.

Eine andere Möglichkeit eine beginnende Pendelbewegung des Anhängers zu detektieren, liegt in der Messung der von der Deichsel auf die Anhängerkupplung ausgeübten Kraft. Bei einsetzenden Pendelbewegungen des Anhängers treten an der Anhängerkupplung Querkräfte quer zur Bewegungsrichtung des Zugfahrzeuges auf. Diese gemessenen Querkräfte können dann in Abhängigkeit weiterer Bewegungsgrößen des Zugfahrzeuges als Regelgröße eingesetzt werden. Die Regelstrategie des Steuergerätes zielt dann darauf ab, den Querkräften entgegen zu wirken, so daß die Pendelbewegung des Anhängers minimiert wird.

ESP Systeme im Zugfahrzeug verfügen bereits über Querbeschleunigungssensoren, so daß falls das Zugfahrzeug bereits mit ESP ausgerüstet ist und bei genügender Empfindlichkeit des ESP-Querbeschleunigungssensors mit Vorteil das ESP-System des Zugfahrzeuges zur Detektion einer beginnenden Pendelbewegung des Anhängers eingesetzt werden kann. In letzterem Fall wird die vom ESP-Querbeschleunigungssensor gemessene Querbeschleunigung als Regelgröße zur Ansteuerung der Anhängerkupplung verwendet. Die Regelung erfolgt dann in Abhängigkeit des Lenkradwinkels und des Spurmodells für das Anhängergespann derart, daß Regelabweichungen zwischen Fahrerwunsch und Fahrzeugverhalten entgegengewirkt wird.

Mit der Erfindung werden hauptsächlich die folgenden Vorteile erzielt:

Mit der Erfindung wird es möglich bestehende Fahrdynamikregelungen von Zugfahrzeugen auf Fahrzeuggespanne zu erweitern. Die Stellglieder der Anhängerkupplung werden dabei in die Regelstrecke der Fahrdynamikregelung des Zugfahrzeuges miteinbezogen und das Regelprogramm jeweils gespannspezifisch aus Computersimulationen und Fahrversuchen mit dem Gespann ermittelt. Die Unterdrückung von Pendelbewegungen zwischen Zugfahrzeug und Anhänger bedarf hierbei keiner getrennten Fahrdynamikregelung für den Anhänger.

In der Fahrdynamikregelungen des Zugfahrzeuges sind in der Regel bereits mehrere Regelprogramme abgespeichert, die auf die jeweilige Fahrzeugvariante des Fahrzeugherstellers abgestimmt sind. Es wird dann das jeweils dem Fahrzeug zugehörige spezifische Regelprogramm aktiviert. Hierdurch kann eine erprobte Farhrdynamikregelung in verschiedene Fahrzeugtypen eingebaut werden und eine Variantenvielfalt der Fahrzeugdynamikregelung klein gehalten werden. Das Ankoppeln eines Anhängers an ein Zugfahrzeug beinflußt und verändert auch das dynamische Fahrzeugverhalten des Zugfahrzeuges. Es ist daher vorteilhaft für den Gespannbetrieb und für den anhängerlosen Betrieb des Zugfahrzeuges zwei verschiedene Regelprogramme in der Fahrdynamikregelung des Zugfahrzeuges abzulegen, die jeweils für den Alleinbetrieb des Zugfahrzeuges und für den Gespannbetrieb des Zugfahrzeuges optimiert sind.

Ein weiterer Vorteil der beweglichen Anhängerkupplung ergibt sich bei der langsamen und engen Kurvenfahrt eines Fahrzeuggespanns. Hier kann mit einer gezielten Auslenkung der Anhängerkupplung das Nachlaufen oder Schneiden der Kurve durch den Anhänger zumindest reduziert werden. Um dieses Nachlaufen zum Kurveninnern zu verhindern wird bei der langsamen und engen Kurvenfahrt die Anhängerkupplung bzw. die Kupplungsfaust zum Kurvenäußeren verschoben. Ein aktives Mitlenken der Anhängerkupplung kommt nur bei langsamer Fahrt unterhalb einer definierten Grenzgeschwindigkeit des Fahrzeuggespannes zum Einsatz. Diese Grenzgeschwindigkeit ist spezifisch für das jeweilige Fahrzeuggespann und wird aus Fahrversuchen ermittelt. Ebenso wird aus Fahrversuchen ein Grenzkurvenradius ermittelt, bei dessen Unterschreiten die Lenkhilffunktion der Anhängerkupplung aktiviert wird. Für die Aktivierung der Lenkhilffunktion muß mindestens einer der beiden Parameter Grenzgeschwindigkeit oder Grenzkurvenradius unterschritten werden.

Ein weiterer Vorteil der erfindungsgemäßen Anhängerkupplung ist darin zu sehen, daß mit der Anhängerkupplung eine Vielzahl unterschiedlicher Anhänger von ein und demselben Zugfahrzeug aus im Gespannbetrieb stabilisiert werden können. Mit Vorteil ist in der Fahrdynamikregelung des Zugfahrzeugs hierzu für jeden anzukoppelnden Anhänger ein Anhängerspezifisches Regelprogramm für das Gesamtgespann abgelegt. Je nach dem angekoppelten Anhänger kann dann vom Fahrzeugführer das dem jeweiligen, angekoppelten Anhänger zugeordnete Regelprogramm ausgewählt und aktiviert werden. Da die Fahrdynamikregelung während des Fahrbetriebes die Daten der angeschlossenen Sensoren am Zugfahrzeug und am Anhänger laufend ermittelt, ist es auch möglich durch einen rechnerischen Vergleich der gemessenen Sensordaten mit den abgespeicherten Parameter der anhängerspezifischen Spumodelle, eine selbsttätige Anhängererkennung einzurichten. Die erfindungsgemäße Anhängerkupplung erlaubt durch die Unterdrückung der Pendelbewegungen der Anhängerdeichsel auch die Stabilisierung von Gespannen, zu deren Anhängern in der Fahrdynamikregelung kein spezifisches Regelprogramm abgelegt ist. In diesem Fall wird ein anhängerunspezifisches Standard-Regelprogramm für den universellen Gespannbetrieb des Zugfahrzeuges ausgewählt und aktiviert.

Mit den Stellgliedern der Anhängerkupplung ist es möglich den Anhänger in beschränktem Umfang unabhängig vom Lenkeinschlag am Zugfahrzeug zu lenken. Dies ist ein Vorteil, der insbesondere beim Rangieren von Gespannen Bedeutung hat. Beim Rückwärtsfahren werden Gespanne sehr schnell instabil. Auch wirkt der Lenkeinschlag an den Vorderrädern eines Zugfahrzeuges zunächst nur auf die Hinterachse des Fahrzeuges selbst, bevor sich die Lenkbewegung auf den Anhänger überträgt. Anders ausgedrückt sind bei der Rückwärtsfahrt von Gespannen an den Lenkrädern des Zugfahrzeuges im Verhältnis zur Winkeländerung zwischen Zugfahrzeug und Anhänger oft überproportional große Lenkeinschläge notwendig um das Gespann in die gewünschte Richtung zu rangieren. Abhilfe schafft hier die erfindungsgemäße Anhängerkupplung, die bei der Rückwärtsfahrt, den Lenkeinschlag am Zugfahrzeug durch aktives Mitlenken der Anhängerkupplung entsprechend einer Regelung für die Rückwärtsfahrt unterstützt. In diesem Fall verfügt die Fahrdynamikregelung über einen Fahrstufensensor, der angibt welche Fahrstufe am Getriebe des Zugfahrzeuges eingelegt ist. Ist am Getriebe ein Rückwärtsgang eingelegt und ist ein Anhänger angekoppelt wird in der Fahrdynamikregelung ein spezielles Regelprogramm für die Rückwärtsfahrt ausgewählt und aktiviert.

Ausführungsbeispiele der Erfindung werden im folgenden anhand von Zeichnungen dargestellt und näher erläutert. Es zeigen:
- Fig.1: eine schematische Darstellung einer erfindungsgemäßen Anhängerstabilisierung integriert in ein Zugfahrzeug mit einer Fahrdynamikregelung,
- Fig. 2: eine erfindungsgemäße Anhängerstabilisierung als Nachrüstsatz für Zugfahrzeuge ohne Fahrdynamikregelung,
- Fig. 3: ein vereinfachtes Blockdiagramm einer Fahrdynamikregelung mit Ein- und Ausgangsgrößen
- Fig. 4: eine Ausführungsform der Anhängerstabilisierung, bei der die Anhängerkupplung auf einer Linearführung gelagert ist,
- Fig. 5: eine Ausführungsform der Anhängerstabilisierung, bei der die Anhängerkupplung auf einer Drehführung mit einer vertikalen Drehachse gelagert ist,
- Fig. 6: eine Ausführungsform der Anhängerstabilisierung, bei der die Anhängerkupplung auf einer Drehführung mit einer horizontalen Drehachse gelagert ist.

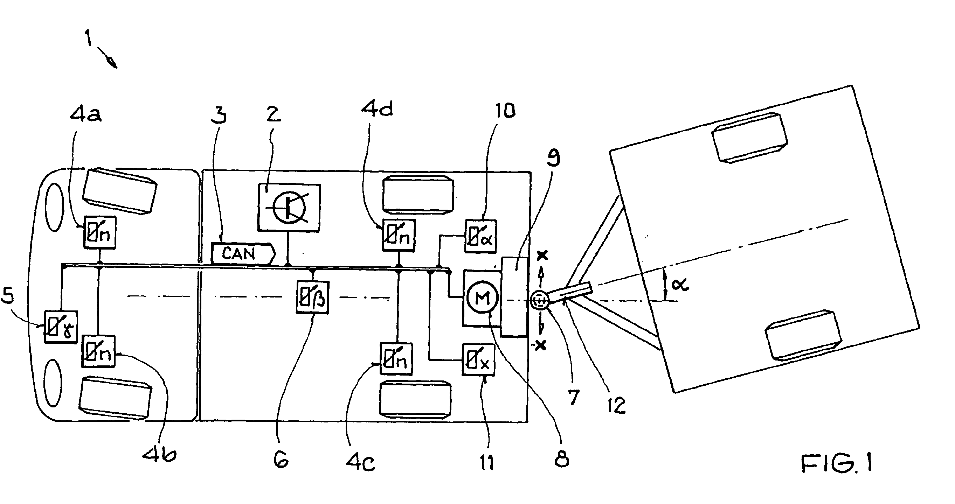

Fig. 1 zeigt eine schematische Gesamtdarstellung der erfindungsgemäßen Anhängerstabilisierung wie sie zweckmäßiger Weise in ein mit ESP vorgerüstetem Zugfahrzeug 1 integriert wird. In dem Fahrzeug sind an ein Steuergerät 2 der Fahrdynamikregelung über eine lineare Busstruktur 3 verschiedene Meßwertaufnehmer angeschlossen. Üblicherweise sind die Meßwertaufnehmer eines ESP System über einen an sich bekannten CAN-Bus miteinander vernetzt. ( CAN= Controlled Area Network). Über diesen CAN-Bus ist das Steuergerät mit vier Raddrehzahlsensoren 4a, 4b, 4c, 4d verbunden. An jedem Rad des Zugfahrfahrzeuges ist ein Drehzahlsensor angebracht. Mit einem Lenkradwinkelsensor 5 wird der Lenkeinschlag am Zugfahrzeug gemessen und über den CAN-Bus an das Steuergerät übertragen. Mit einem kombinierten Drehraten/Querbeschleunigungssensor 6 wird die Drehrate des Fahrzeuges um seine Hochachse und eventuell auftretende Beschleunigung quer zu Längsachse des Fahrzeuges gemessen. Der kombinierte Drehraten/Querbescheunigungssensor 6 wird üblicherweise auch als Giermomentsensor bezeichnet. Die in einem ESP-System vorhandenen Stellglieder sind nicht dargestellt. Ein ESP-System enthält in der Regel ein Hydroaggregat zur Ansteuerung der Radbremsen, ein Steuergerät für das Motormanagement, eine Zündwinkelverstellung, eine Kraftstoffeinspritzung oder eine angesteuerte Drosselklappe, auch als EGAS bezeichnet.

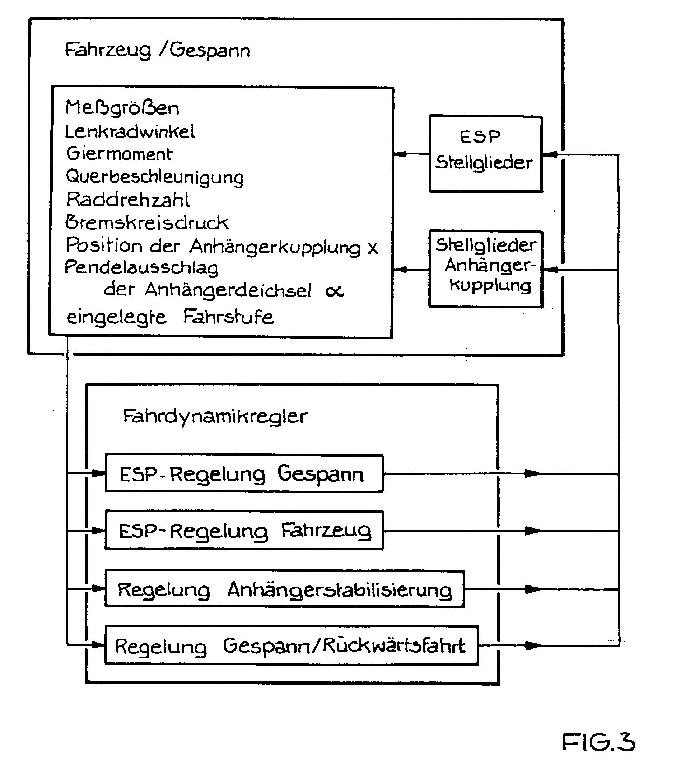

Die erfindungsgemäße Anhängerstabilisierung ergänzt nun ein solches beispielhaft, angeführtes ESP-System durch eine mit Stellgliedern 8 versehene Anhängerkupplung 7, die mittels der Stellglieder in einer Führung 9 beweglich gelagert ist. Das oder die Stellglieder 8, auch als Aktorik bezeichnet, sind in dem gezeigten Ausführungsbeispiel nach Fig. 1 mit dem Steuergerät 2 der Fahrdynamikregelung des Zugfahrzeuges verbunden. Weiterhin umfaßt die erfindungsgemäße Anhängerstabilisierung eine Winkelsensorik 10 und einen Positionssensor 11. Mit der Winkelsensorik 10 wird der relative Winkel α zwischen der Längsachse des Zugfahrzeuges 1 und der Längsachse der Anhängerdeichsel 12 gemessen. Der Positionssensor mißt die jeweils aktuelle Position x der Anhängerkupplung 7 in der Führung 9. Winkelsensorik 10 und Positionssensor 11 sind ebenfalls über den CAN-Bus des Fahrzeugbordnetzes mit dem Steuergerät der Fahrdynamikregelung verbunden. In dem Steuergerät sind die aus Simulationen und Fahrversuchen ermittelten Regelparameter für die jeweiligen Gespanne aus unterschiedlichen Zugfahrzeugen und unterschiedlichen Anhängern abgelegt, sowie die Regelprogramme für die Gespanne, für das Zugfahrzeug alleine, und zur Ansteuerung der Stellglieder der Anhängerkupplung. Die Teilregelungen sind im Blockschaltbild der Fig. 3 näher dargestellt. Die Regelstrategie zur Unterdrückung der Pendelbewegungen folgt dabei dem Prinzip den Pendelausschlag der Anhängerdeichsel zu verkleinern, indem die Anhängerkupplung in Richtung des Pendelausschlages nachgeführt wird und damit der Winkel zwischen der Zugfahrzeuglängsachse und der Anhängerdeichsel verkleinert wird. Ist mit dieser Maßnahme die Pendelbewegung des Anhängerdeichsel zum Stillstand gekommen, wird die Anhängerkupplung wieder in die Ausgangsposition auf der Mittellinie des Zugfahrzeuges zurückgefahren.

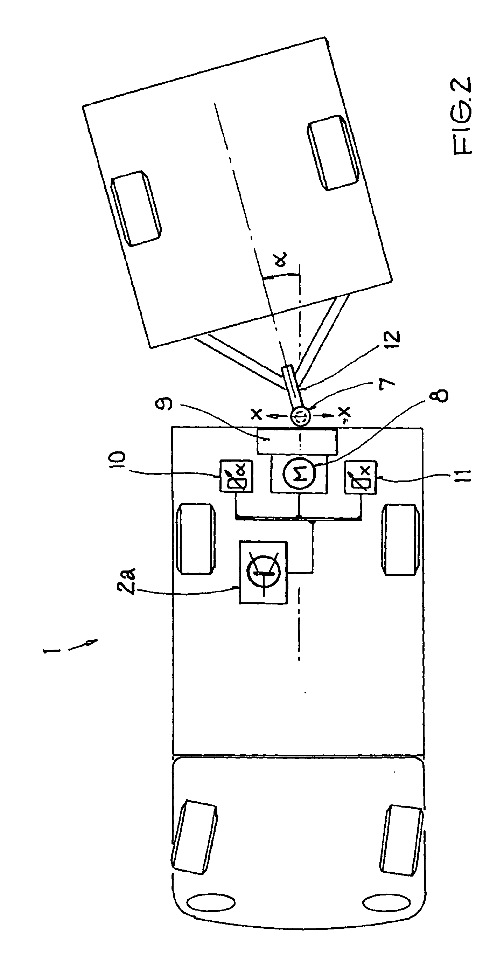

Verfügt das Zugfahrzeug über keine vorgerüstete Fahrdynamikregelung kann in einer in Fig. 2 dargstellten Ausführungsform die Anhängerstabilisierung als Nachrüstsatz auch mit einem speziell für die Anhängerkupplung vorgesehenen Steuergerät 2a ausgebildet sein. In diesem Fall beschränkt sich die Regelung auf die Ansteuerung der Stellglieder der Anhängerkupplung zur Unterdrückung von oszilierenden Pendelbewegungen der Anhängerdeichsel, gemäß der Regelstrategie des zuvor genannten Ausführungsbeispiels aus Fig. 1. Das heißt die Ansteuerung der Stellglieder 8 erfolgt in einer Weise, daß die Anhängerkupplung 7 in der Führung 9 in Richtung des Pendelausschlages der Anhängerdeichsel verfahren wird.

Die bevorzugte Ausführungsform ist die Integration der Anhängerkupplung in ein vollständiges System zur Fahrdynamikregelung gemäß dem Ausführungsbeispiel aus Fig. 1, da dann auch eine ESP-Fahrdynamikregelung des Gespannes möglich ist.

Fig. 3 zeigt ein vereinfachtes Blockschaltbild einer Fahrdynamikregelung mit integrierter Anhängerstabilisierung. Das zu regelnde System ist das Fahrzeug oder das Gespann. An dieser Regelstrecke werden mit Sensoren verschiedene Meßgrößen ermittelt. Die Meßgrößen beinhalten in nicht abschließender Aufzählung Informationen über, den Lenkradwinkel, das Giermoment, die Querbeschleunigung, die Raddrehzahl, den Bremsdruck, die Position der Anhängerkupplung, den Pendelausschlag der Anhängerdeichsel sowie die eingelegte Fahrstufe. Die Informationen werden auf einen BUS, z.B. einen CAN-BUS gegeben und sind die Eingangsgrößen für den Fahrdynamikregler, oder genauer für das Steuergerät der Fahrdynamikregelung. Der Fahrdynamikregler umfaßt mehrere Überlagerungen und Unterlagerung von Reglern, die je nach dem Fahrzustand des Fahrzeuges und je nach dem ob das Fahrzeug im Gespannbetrieb fährt oder nicht, zur Anwendung kommen. Die verschiedenen Regelungen sind hierbei in Software als z.T. hochkomplexe Regelprogramme realisiert und in entsprechenden Hardwarebausteinen im Steuergerät der Fahrdynamikregelung abgelegt. Als Teilregelungen sind eine ESP-Regelung für den Gespannbetrieb, eine ESP-Regelung für den Betrieb des Zugfahrzeuges ohne Anhänger, eine Regelung zur Anhängerstabilisierung sowie eine Regelung für die Rückwärtsfahrt eines Gespannes, bei der die Anhängerkupplung als Lenkhilfe eingesetzt wird, in dem Fahrdynamikregler abgelegt.

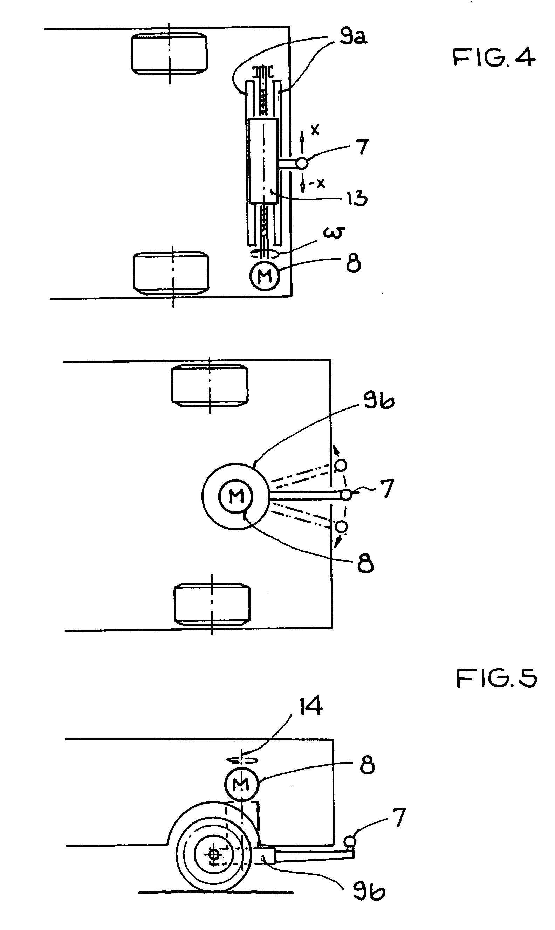

Fig. 4 bis Fig. 6 zeigen verschiedene Ausführungsformen für die Führung, in der die Anhängerkupplung 7 jeweils beweglich ist. Prinzipiell sind zwei unterschiedliche Führungen für die Anhängerkupplung einsetzbar; eine Linearführung oder eine Drehführung.

In Fig. 4 ist schematisch eine Linearführung für die Anhängerkupplung 7 gezeigt. Auf zwei Führungsschienen 9a ist die Anhängerkupplung mit einem Schlitten 13 gelagert und am Fahrzeugende quer zur Fahrzeuglängsachse hin und her beweglich. Für den Linearantrieb des Fahrzeugschlittens können z.B. in nicht abschließender Aufzählung Zahnriementriebe, Zahnstangentriebe, Kettentriebe oder ein Kugelgewindetrieb eingesetzt werden, die jeweils mittel eine elektrischen Motors angetrieben werden. Alternativ sind auch hydraulische oder pneumatische Antriebe in Form von Stellzylindern möglich.

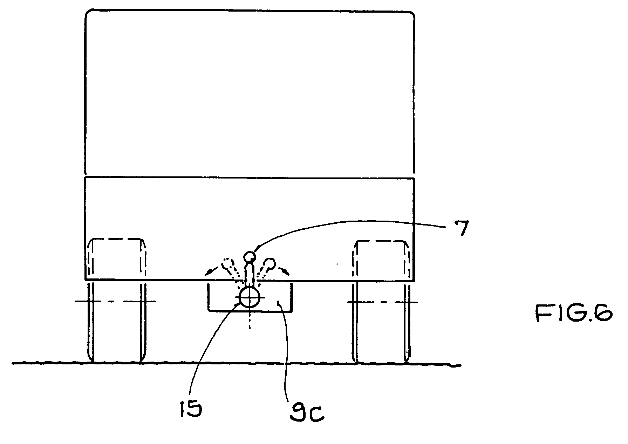

Fig. 5 zeigt eine Anhängerkupplung 7, die am Fahrzeugende mit einer Drehführung gelagert ist. Die Drehführung hat hierbei eine vertikale Drehachse 14. Der Antrieb der Anhängerkupplung kann mit einem direkt oder mittels Getriebe auf die Drehachse gekoppelten elektrischen Motor erfolgen. Linearantriebe, die mittels Hebeln an die Drehführung angelenkt sind, können als Antrieb für die Anhängerkupplung in der Drehführung auch eingesetzt werden. Die Anhängerkupplung ist auf einem horizontalen Kreisbogen verfahrbar. Hierdurch hat die Bewegung der Anhängerkupplung eine horizontale Komponente quer zur Fahrzeuglängsachse und ist somit geeignet eventuelle Pendelbewegungen einer Anhängerdeichsel auszugleichen.

Fig. 6 zeigt nochmals eine alternative Ausführungsform einer Drehführung für die Anhängerkupplung 7. Die Drehachse 15 ist in diesem Ausführungsbeispiel horizontal parallel zur Fahrzeuglängsachse angeordnet. Die Funktionsweise bleibt im übrigen diesselbe wie im Ausftihrungsbeispiel der Fig. 5.

## Patentansprüche

1. Vorrichtung zur Stabilisierung eines Fahrzeuggespanns, an dessen Zugfahrzeug (1) über eine Anhängerdeichsel (12) ein Anhänger angekoppelt ist, bestehend aus:
- einer Anhängerkupplung (7), die mittels einer Führung (9) am Zugfahrzeug beweglich gelagert ist,
- einem oder mehreren Stellgliedern (8), die mit der Anhängerkupplung (7) in mechanischer Wirkverbindung steht oder stehen,
- einer Winkelsensorik (10), mit der auftretende Pendelbewegungen der Anhängerdeichsel (12) detektiert werden,
- einem oder mehreren Positionssensoren (11), der die aktuelle Position der Anhängerkupplung (7) in der Führung (9) detektiert,
- und einem Steuergerät (2,2a) das über Datenleitungen (3) mit der Winkelsensorik (10), mindestens einem Positionssensor (11) und mindestens einem Stellglied (8) verbunden ist,
- wobei in dem Steuergerät (2,2a) mindestens ein Regelprogramm zur Ansteuerung des oder der Stellglieder (8) abgelegt ist und mit dem oder den Stellgliedern (8) die Anhängerkupplung (7) in ihrer Führung (9) mit einer Bewegungskomponente quer zur Längsachse des Zugfahrzeugs verfahrbar ist.

2. Vorrichtung nach Anspruch 1, bei der das Steuergerät (2a) Bestandteil einer Fahrdynamikregelung ist.

3. Vorrichtung nach Anspruch 1 oder 2, bei der die Datenleitungen (3) Bestandteil eines lineraen Bussystems sind.

4. Vorrichtung nach Anspruch 3, bei der das Bussystem ein CAN-Bus ist.

5. Vorrichtung nach Anspruch 2, bei der in dem Steuergerät (2a) mehrere Regelprogramme abgelegt sind.

6. Vorrichtung nach einem der Ansprüche 1 bis 5, bei der die Winkelsensorik (10) aus einem Drehwinkelsensor besteht, der in der Kupplungsfaust angeordnet ist.

7. Vorrichtung nach einem der Ansprüche 1 bis 5, bei der die Winkelsensorik aus einem oder mehreren berührungslos arbeitenden Entfernungssensoren besteht.

8. Vorrichtung nach einem der Ansprüche 1 bis 5, bei der die Winkelsensorik aus mindestens einem Kraflaufnehmer besteht.

9. Vorrichtung nach einem der Ansprüche 1 bis 8, bei der die Führung (9) eine Linearführung ist.

10. Vorrichtung nach einem der Ansprüche 1 bis 8, bei der die Führung (9) eine Drehführung mit einer vertikalen Drehachse (14) oder einer horizontalen Drehachse (15) parallel zur Fahrzeuglängsachse ist.

11. Verwendung einer Vorrichtung nach einem der Ansprüche 1 bis 10 zur Unterdrückung von Pendelbewegungen zwischen Zugfahrzeug (1) und Anhängerdeichsel (12).

12. Verwendung einer Vorrichtung nach einem der Ansprüche 1 bis 10 als Lenkhilfe für den Anhänger um ein Nachlaufen des Anhängers zum Kurveninnern zumindest zu verringern.

13. Verwendung einer Vorrichtung nach einem der Ansprüche 1 bis 10 als Lenkhilfe bei der Rückwärtsfahrt von Gespannen.

14. Verfahren zur Stabilisierung eines Fahrzeuggespanns, an dessen Zugfahrzeug (1) über eine Anhängerdeichsel (12) ein Anhänger angekoppelt ist und an dessen Zugfahrzeug eine Vorrichtung nach Anspruch 1 angebracht ist,
bei dem die Bewegung der Anhängerkupplung (7) in der Richtung der Auslenkung (α) der Anhängerdeichsel (12) erfolgt, so daß bei Auftreten einer Pendelbewegung der Anhängerdeichsel die Auslenkung der Anhängerdeichsel verkleinert wird.

15. Verfahren nach Anspruch 14, bei dem die Vorrichtung nach Anspruch 1 in eine bestehende Fahrdynamikregelung des Zugfahrzeugs integriert wird.

16. Verfahren nach Anspruch 14, bei dem das Auftreten von Pendelbewegungen der Anhängerdeichsel mit einem Winkelsensor detektiert wird.

17. Verfahren nach Anspruch 14, bei dem das Auftreten von Pendelbewegungen der Anhängerdeichsel mit mindestens einem berührungslos arbeitenden Entfernungssensor detektiert wird.

18. Verfahren nach Anspruch 14, bei dem das Auftreten von Pendelbewegungen der Anhängerdeichsel mit einem Kraftaufnehmer detektiert wird.

19. Fahrdynamikregelung für Fahrzeuggespanne aus Zugfahrzeug und Anhänger, wobei das Zugfahrzeug mit einem ESP-System, bestehend aus
- einem Steuergerät (2), das über Datenleitungen (3) mit Meßaufnehmern (4a,4b,4c,4d) für die Raddrehzahl, mit einem Lenkradwinkelsensor (5), mit einem Giermomentsensor (6) und mit Stellgliedern zur Betätigung der Radbremsen des Zugfahrzeuges verbunden ist,
- einem oder mehrerem Regelprogrammen zur Ansteuerung der angeschlossenen Stellglieder, wobei das oder die Regelprogramme im Steuergerät abgelegt sind und das oder die Regelprogramme aus einer Regelabweichung zwischen Sollverhalten des Fahrzeugs (=Fahrerwunsch) und Istverhalten des Fahrzeugs (=Fahrzeugverhalten), entsprechend einem das Fahrzeug charakterisierenden Spurmodells, die Steuerbefehle für die angeschlossenen Stellglieder errechnen,
ausgerüstet ist,
**dadurch gekennzeichnet, daß**
in die Regelstrecke der Fahrdynamikregelung mindestens ein Stellglied (8) zur Betätigung einer beweglichen Anhängerkupplung (7) integriert ist, mindestens ein Meßwertaufnehmer (10) zur Erfassung von Pendelbewegungen der Anhängerdeichsel und mindestens ein Meßwertaufnehmer (11) zur Erfassung der Position der Anhängerkupplung (7) mit dem Steuergerät (2) verbunden sind und die Bewegung der Anhängerkupplung (7) mit einer Komponente quer zur Längsachse des Zugfahrzeuges erfolgt.

20. Fahrdynamikregelung nach Anspruch 19, **dadurch gekennzeichnet, daß** in dem Steuergerät (2) der Fahrdynamikregelung mehrere anhängerspezifische Regelprogramme abgelegt sind.

21. Fahrdynamikregelung nach Anspruch 19, **dadurch gekennzeichnet, daß** in dem Steuergerät (2) mindestens ein Anhänger-unspezifisches Standardregelprogramm abgelegt ist.

22. Verwendung einer Fahrdynamikregelung nach Anspruch 19 zur Unterdrückung von Pendelbewegungen der Anhängerdeichsel (12) an der Anhängerkupplung (7).

23. Verwendung einer Fahrdynamikregelung nach Anspruch 19 als Lenkhilfe für den Anhänger, um bei der Kurvenfahrt das Nachlaufen des Anhängers zum Kurveninnern zumindest zu verringern.

24. Verwendung einer Fahrdynamikregelung nach Anspruch 19 als Rangierhilfe bei der Rückwärtfahrt von Fahrzeuggespannen.
